# EUROPÄISCHE PATENTSCHRIFT

(11) **EP 1 984 851 B1**
(45) Veröffentlichungstag und Bekanntmachung des Hinweises auf die Patenterteilung: **11.03.2015**
(21) Anmeldenummer: 07704063.2
(22) Anmeldetag: 22.01.2007
(51) Int. Cl.: G06K 9/03, G06T 7/00, G06F 17/24

(54) **VERFAHREN ZUR BEWERTUNG DER QUALITÄT EINES BILDES, VERFAHREN ZUR HERSTELLUNG EINES DOKUMENTS COMPUTERPROGRAMMPRODUKT, NUTZER-SCHNITTSTELLE, DATEI UND ELEKTRONISCHES GERÄT**
METHOD FOR EVALUATING THE QUALITY OF AN IMAGE, METHOD FOR PRODUCING A DOCUMENT COMPUTER PROGRAM PRODUCT, USER INTERFACE, DATA FILE AND ELECTRONIC DEVICE
PROCEDE POUR EVALUER LA QUALITE D'UNE IMAGE, PROCEDE DE CREATION D'UN DOCUMENT, PRODUIT-PROGRAMME INFORMATIQUE, INTERFACE UTILISATEUR, FICHIER ET APPAREIL ELECTRONIQUE

(30) Priorität: 06.02.2006 DE 102006005617
(43) Veröffentlichungstag der Anmeldung: 29.10.2008
(73) Patentinhaber: Bundesdruckerei GmbH, 10958 Berlin (DE)
(72) Erfinder: DOMES, Jan, 10437 Berlin (DE); REMIREZ-CORONAS, Luis, 14059 Berlin (DE)
(74) Vertreter: Richardt Patentanwälte PartG mbB
(86) Internationale Anmeldenummer: PCT/EP2007/050596
(87) Internationale Veröffentlichungsnummer: WO 2007/090727

(56) Entgegenhaltungen:
- EP-A- 1 413 972
- GB-A- 2 239 725
- US-A1- 2004 205 525

## Beschreibung

Die Erfindung betrifft ein Verfahren zur Bewertung der Qualität eines Bildes, ein Verfahren zur Herstellung eines Dokuments, insbesondere eines Wert- oder Sicherheitsdokuments, insbesondere eines Ausweisdokuments, ein Computerprogrammprodukt, eine Nutzer-Schnittstelle, eine Datei sowie ein elektronisches Gerät, wie zum Beispiel ein Computersystem, ein digitales Kamerasystem, ein Datenbanksystem oder dergleichen.

Die Ausstellung eines Ausweisdokuments, wie zum Beispiel eines Personalausweises oder eines Beisepass, erfolgt im Stand der Technik im Allgemeinen so, dass der antragstellende Bürger ein Bild aufnehmen lässt, und mit diesem Bild bei der zuständigen Pass- und Ausweisbehörde einen Antrag auf Ausstellung des gewünschten Ausweisdokuments stellt. Der Antrag wird von einem Sachbearbeiter der Pass- und Ausweisbehörde bearbeitet, wobei der Sachbearbeiter die Qualität des Bildes überprüft.

Die Überprüfung der Qualität erfolgt auf der Grundlage einer sogenannten Foto-Mustertafel, wie sie zum Beispiel von der Bundesdruckerei (http://www.bundesdruckerei.de/de/support/download/Fotomustertafel 2005 72dpi.pdf) und der International Civil Aviation Organisation (ICAO) (http://www.icao.int/mrtd/download/documents/Annex%20A%20-%20Photograph%20Guidelines.pdf) herausgegeben werden.

Diese Bewertung der Bildqualität durch den Sachbearbeiter erfolgt ohne weitere technische Hilfsmittel und ist daher weitgehend durch das subjektive Qualitätsurteil des Sachbearbeiters geprägt. Wenn nach Auffassung des Sachbearbeiters die Qualität des Bildes hinreichend ist, wird eine entsprechende Bestellung des Ausweisdokuments, zum Beispiel bei der Bundesdruckerei ausgelöst, welche das Ausweisdokument dann produziert und an die Pass- und Ausweisbehörde liefert. Das Ausweisdokument wird dann von dem Sachbearbeiter an den antragstellenden Bürger ausgehändigt. Nachteilig ist dabei insbesondere, dass diese Überprüfung des Bildes keine objektive Überprüfung des Bildes auf Biometrietauglichkeit, d.h. die Tauglichkeit des Bildes für die Anwendung biometrischer Verfahren, beinhaltet.

Aus der EP 1 208 539 B1 ist ein Verfahren und eine Vorrichtung zur biometrischen Authentisierung einer Person bekannt. Dabei wird ein Parameters anhand von individuellen Eigenschaften der Person, die die sensorische Erfassung der biometrischen Daten, insbesondere von Fingerabdrücken, beeinflussen, ermittelt. Dieser Parameter wird für eine nachfolgende biometrische Überprüfung verwendet. Ähnliche Verfahren sind ferner auch bekannt geworden aus Technischer Bericht der Michigan State University MSU-CPS-99-14, "Fingerprint Matching: Data Acquisition and Performance Evaluation", März 1999 - (http://www.cse.msu.edu/cgiuser/web/tech/document?NUM=99-14) sowie aus den DE 196 10 066 C1 und WO 95/26013.

Verfahren zur Prüfung von Bildaufnahmen von Personen sind ferner aus EP 1 413 972 A1 und US 2005/0058369 A1 bekannt. Insbesondere aus der EP 1 413 972 A1 sind ein Verfahren zur Prüfung von Bildaufnahmen von Personen und eine zu dessen Durchführung eingerichtete Datenverarbeitungseinrichtung bekannt. Das Bild wird anhand vorgegebener Qualitätsmaßstäbe überprüft. Erfüllt das Bild ein Qualitätskriterium nicht, so wird dem Benutzer die Durchführung von Bildkorrekturmaßnahmen angeboten.

Der Erfindung liegt dem gegenüber die Aufgabe zu Grunde, ein verbessertes Verfahren zur Bewertung der Qualität eines Bildes zu schaffen. Ferner liegt der Erfindung die Aufgabe zu Grunde, ein entsprechendes Verfahren zur Herstellung eines Dokuments, insbesondere eines Wert- oder Sicherheitsdokuments, wie z.B. eines Ausweisdokuments, ein Computerprogrammprodukt, eine Nutzer-Schnittstelle, eine Datei und ein elektronisches Gerät zu schaffen.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Ansprüchen angegeben.

Erfindungsgemäß wird ein Verfahren zur Bewertung der Qualität eines Bildes mit folgenden Schritten geschaffen: Zugriff auf eine Bewertungsdatei, die ein Bewertungsschema beinhaltet durch ein Bewertungsprogramm, Bewertung von Bildanalyseergebnissen anhand des Bewertungsschemas durch das Bewertungsprogramm und Ausgabe der Bewertung. Dabei beinhaltet das Bewertungsschema ein oder mehrere Muss-Kriterien und ein oder mehrere Kann-Kriterien. Bei Nichterfüllung eines der Muss-Kriterien wird die Qualität des Bildes unabhängig von den Kann-Kriterien als nicht ausreichend bewertet. Ferner ordnet das Bewertungsschema den einzelnen Muss- und Kann-Kriterien Bewertungspunkte zu, die aufaddiert werden, soweit die betreffenden Muss- und Kann-Kriterien erfüllt sind. Die Summe der aufaddierten Bewertungspunkte wird mit einem Schwellwert verglichen, wobei die Qualität des Bildes als nicht ausreichend bewertet wird, wenn die Summe kleiner als der Schwellwert ist.

Hierbei ist besonders die Möglichkeit der Gewichtung der verschiedenen Kriterien über verschiedene den zu überprüfenden Eigenschaften jeweils zugeordnete Punktwerte vorteilhaft. Ferner ermöglicht dies eine flexible Anpassung und Weiterentwicklung des Bewertungsschemas, um etwa Erkenntnisse in der praktischen Anwendung des Bewertungsschemas im Sinne einer Feinabstimmung einfließen lassen zu können.

Die Aufteilung in Kann- und Muss-Kriterien ist insbesondere dann vorteilhaft, wenn das Bewertungsschema Kriterien unterschiedlicher Wichtigkeit beinhaltet. Die essentiellen Kriterien, die zum Beispiel für die Biometrietauglichkeit des Bildes unabdingbar sind, werden dann als Muss-Kriterien formuliert und weitere Kriterien des Kriterienkatalogs als Kann-Kriterien. Dies ermöglicht es, den Grad der Übereinstimmung eines Bildes mit den Anforderungen des Kriterienkatalogs zu ermitteln und nicht nur eine binäre Tauglich- / Untauglich-Entscheidung. Auf diese Art und Weise kann man eine differenziertere Qualitätsaussage erhalten, ob nämlich ein Bild gerade so die Muss-Kriterien erfüllt oder gar weit übererfüllt.

Das erfindungsgemäße Verfahren kann prinzipiell für die Qualitätsbewertung beliebiger Arten von Bildern verwendet werden, insbesondere von Bildern, die auch zur Verwendung in biometrischen Verfahren vorgesehen sind. Beispielsweise kann ein erfindungsgemäßes Verfahren zur Bewertung der Qualität des Bildes einer Person, wie zum Beispiel eines Gesichtsbildes verwendet werden. Das erfindungsgemäße Verfahren kann ebenso für andere Arten von Bildern verwendet werden, wie zum Beispiel für die Qualitätsbewertung von Fingerabdruckbildern, Bildern der Iris oder dergleichen.

Grundlage der Qualitätsbewertung eines Bildes ist eine Bewertungsdatei, die ein Bewertungsschema beinhaltet. Das Bewertungsschema kann auf der Basis von vorgegebenen Kriterien erstellt werden, die ein Bild für einen bestimmten Zweck erfüllen muss und/oder soll.

Vorzugsweise wird ein vorgegebener Kriterienkatalog als Bewertungsschema formuliert. Beispielsweise wird jedes Kriterium des Kriterienkatalogs als eine Eigenschaft des zu überprüfenden Bildes mit einem der Eigenschaft zugeordneten Schwellwert definiert. Für Gesichtsbilder kann beispielsweise als Kriterium für die Nutzung in Reisepässen das Kriterium definiert sein, dass der Augenabstand in dem Gesichtsbild mindestens 90 Pixel betragen muss. Zur Übersetzung in das Bewertungsschema wird dort die Eigenschaft "Augenabstand" mit dem zugeordneten Schwellwert "90 Pixel" definiert.

Je nach dem beabsichtigten Verwendungszweck des Bildes können dabei verschiedene Bewertungsschemata formuliert werden, die mehr oder weniger komplexe Kriterienkataloge implementieren.

Für die Qualitätsbewertung eines Bildes wird auf die in dem Bewertungsschema festgelegten zu prüfenden Eigenschaften des Bildes zugegriffen. Diese Eigenschaften des Bildes können entweder bereits bekannt sein, manuell eingegeben werden, oder sie werden erforderlichenfalls ganz oder teilweise als Teil des erfindungsgemäßen Verfahrens durch eine Bildanalyse ermittelt. Beispielweise werden in einer Ausführungsform des erfindungsgemäßen Verfahrens zunächst die gemäß Bewertungsschema relevanten Eigenschaften des zu bewertenden Bildes detektiert und für diese Eigenschaften jeweils Messwerte ermittelt. Beispielsweise kann für die Eigenschaft "Augenabstand" ein Messwert von 70 Pixeln ermittelt werden.

Die ermittelten Messwerte werden mit den jeweiligen Schwellwerten des Bewertungsschemas verglichen. Auf dieser Grundlage wird die Qualität des Bildes bestimmt.

In einer Ausführungsform des erfindungsgemäßen Verfahrens handelt es sich bei allen Eigenschaften des Bewertungsschemas um Muss-Kriterien, das heißt, die Qualität des Bildes wird nur dann als hinreichend bewertet, wenn hinsichtlich sämtlicher Eigenschaften des Bewertungsschemas die entsprechenden Schwellwerte eingehalten werden.

Nach einer Ausführungsform der Erfindung kann die Erfüllung verschiedener Kriterien, insbesondere von Muss- und Kann-Kriterien, in dem Bewertungsschema unterschiedlich gewichtet sein. Hierzu können den jeweiligen Eigenschaften unterschiedliche Punktwerte zugeordnet sein. Beispielsweise ist der Eigenschaft A des Prüfkriteriums A ein Punktwert von 100 Punkten zugeordnet, wohingegen einer anderen Eigenschaft B zur Überprüfung des Prüfkriteriums B ein Punktwert von 200 Punkten zugeordnet ist. Wenn ein zu bewertendes Bild eine bestimmte Eigenschaft erfüllt, werden die dieser Eigenschaft zugeordneten Punkte vergeben und aufsummiert, so dass man einen Gesamtpunktwert erhält, der eine objektive Qualitätsaussage beinhaltet.

Nach einer Ausführungsform der Erfindung werden für die Bewertung der Qualität eines Bildes bereits vorab bekannte Messwerte der relevanten Eigenschaften des Bildes einer Bildanalyse-Funktion übergeben werden, die diese von außen vorgegebenen Messwerte verwendet. In diesem Fall kann ganz oder teilweise auf die Ermittlung von Messwerten verzichtet werden. Beispielsweise können die Augenpositionen "manuell" durch einen Benutzer, zum Beispiel durch Anklicken der Augenposition des auf einen Bildschirm angezeigten Bildes mit einer Computermaus, eingegeben werden. Die auf diese Art und Weise eingegebenen Messwerte für die Augenpositionen werden dann zur Überprüfung der entsprechenden Eigenschaft, das heißt zum Beispiel der Eigenschaft "Augenabstand" verwendet. Je nach Ausführungsform kann die manuelle Vorgabe grundsätzlich erforderlich sein oder nur im Korrekturfall, falls zum Beispiel ein entsprechendes Bildanalyse-Programm ein offensichtlich unzutreffendes Ergebnis geliefert hat. Ein solches Bildanalyseprogramm, beispielsweise zur Ermittlung der Augenpositionen, kann als Teil eines erfindungsgemäßen Computerprogramms oder als dazu externe Komponente vorgesehen sein.

Durch die Datei, die das Bewertungsschema beinhaltet, wird ein objektiver Bewertungsmaßstab geschaffen, der die Bewertung der Bildqualität unabhängig von der subjektiven Einschätzung zum Beispiel eines Sachbearbeiters einer Pass- und Ausweisbehörde macht. Ein solcher objektiver Bewertungsmaßstab ist insbesondere zur Überprüfung der Biometrietauglichkeit des Bildes vorteilhaft.

Gemäß einer Ausführungsform der Erfindung handelt es sich bei der Bewertungsdatei um eine Datei einer Auszeichnungssprache, wie zum Beispiel der Extended Mark-Up Language (XML). In diesem Fall beinhaltet die Bewertungsdatei ein oder mehrere strukturierte Bewertungsschemata für entsprechende Bildeigenschaften.

Die Verwendung eines Auszeichnungssprache für die Bewertungsdatei ist insbesondere deshalb besonders vorteilhaft, da eine solche Auszeichnungssprache eine intuitive 1:1-Umsetzung eines vorgegebenen Kriterienkatalogs in ein Bewertungsschema ermöglicht, welches leicht lesbar und editierbar ist.

Nach einer Ausführungsform der Erfindung ist die Bewertungsdatei auswählbar. Beispielsweise kann die Bewertungsdatei aus mehreren Bewertungsdateien ausgewählt werden.

Gemäß einer Ausführungsform der Erfindung sind unterschiedliche Bewertungsdateien verschiedenen Personentypen zugeordnet. Als Personentypen kommen beispielsweise Erwachsene, Kinder sowie Personen mit und ohne Kopfbedeckung in Frage. Hierbei ist zu beachten, dass zwar im Allgemeinen das Tragen einer Kopfbedeckung auf einem Bild, das für ein Ausweisdokument bestimmt ist, nicht gestattet ist, wobei dies jedoch in Ausnahmefällen bei Personen muslimischen Glaubens gestattet sein muss.

Gemäß einer Ausführungsform der Erfindung sind unterschiedliche Bewertungsdateien unterschiedlichen Verwendungszwecken des Bildes zugeordnet. Beispielsweise können verschiedene Bewertungsdateien für einen elektronischen Reisepass und einen Führerschein vorhanden sein, da die entsprechenden Qualitätsanforderungen und Bildspezifikationen ebenfalls unterschiedlich sein können.

Gemäß einer Ausführungsform der Erfindung werden die Bildanalyseergebnisse als Bildanalysedatei ausgegeben. Vorzugsweise handelt es sich bei dieser Bildanalysedatei ebenfalls um eine Datei einer Auszeichnungssprache, wie zum Beispiel eine XML-Datei. Dies ermöglicht es, die Bildanalyseergebnisse in einer strukturierten Art und Weise zu speichern.

Gemäß einer Ausführungsform der Erfindung beinhaltet die Bewertungsdatei Pfadangaben zu einzelnen Bildanalyseergebnissen der Bildanalysedatei. Den Pfadangaben sind jeweils Bewertungsschemata zugeordnet, die zur Bewertung der entsprechenden Bildanalyseergebnisse dienen. Vorzugsweise sind auch die Pfadangaben in der Bewertungsdatei in der Auszeichnungssprache angegeben.

Gemäß einer Ausführungsform der Erfindung umfasst die Bildanalyse eine oder mehrere der folgenden Bildeigenschaften:
- Dateityp,
- Dateigröße,
- Farbraum,
- Farbtiefe,
- Bildweite,
- Bildhöhe,
- Bildseitenverhältnis,
- Anzahl der auf dem Bild gezeigten Objekte, wie z.B. Anzahl der Gesichter bzw. Anzahl der Fingerabdrücke,
- Anzahl der Augen,
- Augendistanz,
- relative horizontale Kopfposition,
- relative vertikale Kopfposition,
- Verhältnis von Kopfbreite zu Bildbreite,
- Verhältnis von Kopfhöhe zu Bildhöhe,
- Kopfpose,
- Helligkeit,
- Kontrast,
- Dynamik,
- Schärfe,
- Rauschen,
- Artefakte.

Um sicherzustellen, dass nur solche Bilder, die sämtliche Muss-Kriterien erfüllen, als tauglich bewertet werden, werden dann keine Bewertungspunkte für die Erfüllung von Kann-Kriterien vergeben, wenn auch nur eines der Muss-Kriterien nicht erfüllt ist. Dadurch ist sichergestellt, dass ein nicht erfülltes Muss-Kriterium nicht durch die Erfüllung von Kann-Kriterien ausgeglichen werden kann.

Gemäß einer Ausführungsform der Erfindung wird ein Bildbereich, wie z.B. das Gesicht oder die Augen, der auf dem Bild dargestellt ist, automatisch erkannt. Dies kann mit Hilfe von an sich aus dem Stand der Technik bekannter Bildanalysesoftware erfolgen. Durch einen Marker wird der erkannte Bildbereich auf der Bildanzeige markiert. Dadurch kann der Sachbearbeiter eine Plausibilitätskontrolle für die korrekte Erkennung z.B. der Lage des Gesichts und der Augen durchführen.

Alternativ oder zusätzlich können solche Marker auch manuell, zum Beispiel durch einen Mausklick mit einer Computermaus, gesetzt werden. Beispielsweise kann der Sachbearbeiter auf diese Art und Weise ein offensichtlich nicht zutreffendes Ergebnis der automatischen Erkennung eines Bildbereichs korrigieren.

Gemäß einer Ausführungsform der Erfindung wird ein erstes oder ein zweites Signal zur Ausgabe der Bewertung des Bildes generiert, wobei das erste Signal zur Anzeige der Tauglichkeit und das zweite Signal zur Anzeige der Untauglichkeit des Bildes dient. Bei den ersten und zweiten Signalen kann es sich zum Beispiel um visuelle und/oder akustische Signale handeln. Beispielsweise wird das erste Signal dann generiert, wenn ein bewertetes Bild erreicht hat, enien vorgegebenen Mindestwert erreicht. Auch dieser Mindestwert kann Teil des Bewertungsschemas sein.
Alternativ oder zusätzlich kann auch die Qualität des Bildes relativ zu einem Bewertungskontinuum ausgegeben werden, beispielsweise als Prozent- oder Punktwert. Hierbei wird vorzugsweise die Lage des Schwellwerts mit ausgegeben.
Gemäß einer Ausführungsform der Erfindung werden in einem Bildschirmfenster nicht erfüllte Muss-Kriterien ausgegeben. Dies ermöglicht eine entsprechende Korrektur der Bildaufnahmeparameter.

Das erfindungsgemäße Verfahren kann neben der Verwendung in Pass- und Ausweisbehörden für verschiedene weitere Zwecke verwendet werden. Beispielsweise kann es für Kamerasysteme verwendet werden, um die Qualität eines von der Kamera aufgenommenen Bildes zu bewerten. Dies ist insbesondere vorteilhaft für Photografen, die die Aufnahme von Passbildern anbieten, oder auch für Passbildautomaten.

Ferner kann das erfindungsgemäße Verfahren vorteilhaft zum Aufbau von Bilddatenbanken, insbesondere Gesichtsbilddatenbanken, verwendet werden, wobei nur solche Bilder in die Datenbank eingespeist werden, die eine durch die erfindungsgemäße Bewertungsdatei definierte Mindestqualität aufweisen.

In einem weiteren Aspekt betrifft die Erfindung ein Computerprogrammprodukt mit ausführbaren Instruktionen zur Durchführung eines erfindungsgemäßen Verfahrens, insbesondere für die Erstellung eines Dokuments mit einem Bild. Das Computerprogrammprodukt kann beispielsweise von einem üblichen Personal Computer ausgeführt werden, wie er auch bei Pass- und Ausweisbehörden verwendet wird. Ferner kann das Computerprogrammprodukt auch zur Ausführung in einem anderen elektronischen Gerät ausgebildet sein; insbesondere im letzteren Fall kann es sich bei dem Computerprogrammprodukt auch um sogenannte Firmware handeln.

In einem weiteren Aspekt betrifft die Erfindung ein Verfahren zur Herstellung eines Dokuments mit einem Bild, insbesondere eines Wert- oder Sicherheitsdokuments, wie z.B. eines Ausweisdokuments. Das Dokument hat einen elektronischen Speicher zur Speicherung der Bilddaten, wobei die Bilddaten nur dann in den elektronischen Speicher geschrieben werden, wenn sie durch Anwendung eines erfindungsgemäßen Verfahrens als qualitativ ausreichend eingestuft worden sind.

In einem weiteren Aspekt betrifft die Erfindung eine Nutzer-Schnittstelle für ein.elektronisches Gerät zur Bewertung der Qualität eines Bildes. Über die Nutzer-Schnittstelle kann eine der zur Verfügung stehenden Bewertungsdateien ausgewählt werden, beispielsweise in Abhängigkeit von dem Personentyp.

In einem weiteren Aspekt betrifft die Erfindung ein elektronisches Gerät, wie zum Beispiel ein Computersystem, ein Kamerasystem, einen Passbildautomaten oder eine Bilddatenbank, insbesondere eine Gesichtsbilddatenbank. Das elektronische Gerät hat Mittel zur Eingabe von Bilddaten. Die Bilddaten können durch ein externes Gerät, wie zum Beispiel einen Scanner, geliefert oder von einem Speichermedium, beispielsweise einer Multimedia Karte, gelesen werden.

Alternativ oder zusätzlich können die Bilddaten auch von dem elektronischen Gerät selbst generiert werden, beispielsweise von einer in dem elektronischen Gerät integrierten digitalen Kamera, einer Scanner, insbesondere zur Aufnahme eines Fingerabdrucks, oder eines anderen Sensors, wie z.B. einem Fingerabdruckfestkörpersensor. Das elektronische Gerät ist zur Ausführung eines erfindungsgemäßen Verfahrens zur Bewertung der Qualität eines eingegebenen, beispielsweise aufgenommenen, Bildes ausgebildet.

Die Verwendung einer Bewertungsdatei zur Festlegung eines Bewertungsschemas für die Bewertung der Qualität eines Bildes ist auch deshalb besonders vorteilhaft, da dies ein hohes Maß an Flexibilität ermöglicht. Beispielsweise muss bei einer Änderung der Bewertungskriterien nur die Bewertungsdatei aktualisiert werden, ohne dass das Computerprogramm, die Nutzer-Schnittstelle oder das elektronische Gerät ausgetauscht werden müsste. Ferner kann auf diese Art und Weise dasselbe Verfahren für unterschiedliche Zwecke verwendet werden, die jeweils unterschiedliche Bewertungsschemata voraussetzen. Aufgrund der 1:1 Umsetzung des Kriterienkatalogs in das Bewertungsschema der Bewertungsdatei kann diese ohne großen Aufwand an einen geänderten Kriterienkatalog angepasst werden. Insbesondere wenn die Bewertungsdatei in einer Auszeichnungssprache vorliegt, kann diese durch Öffnen und Editieren der Bewertungsdatei verändert werden, um sie Änderungen des Kriterienkatalogs anzupassen und/oder um z.B. die Muss- und/oder Kann-Kriterien zugeordneten Punktwerte zu verändern.

In einem weiteren Aspekt betrifft die Erfindung eine Bewertungsdatei, die ein Bewertungsschema beinhaltet. Das Bewertungsschema definiert Bildeigenschaften und den Bildeigenschaften jeweils zugeordnete Kriterien, wie z. B. Schwellwerte. Vorzugsweise sind den Eigenschaften Punktwerte zugeordnet, die bei Erfüllung des entsprechenden Kriteriums, also z.B. Einhaltung des Schwellwerts, vergeben und aufsummiert werden können.

Im weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen elektronischen Geräts,
- Figur 2: ein Flussdiagramm einer Ausführungsform eines erfindungsgemäßen Verfahrens,
- Figur 3: eine Ausführungsform einer erfindungsgemäßen Nutzer-Schnittstelle,
- Figur 4: die Nutzer-Schnittstelle der Figur 3 mit einer Anzeige der einzelnen bei der Bewertung erzielten Punktwerte,
- Figur 5: ein Blockdiagramm eines Dokuments mit einem Bilddatenspeicher.

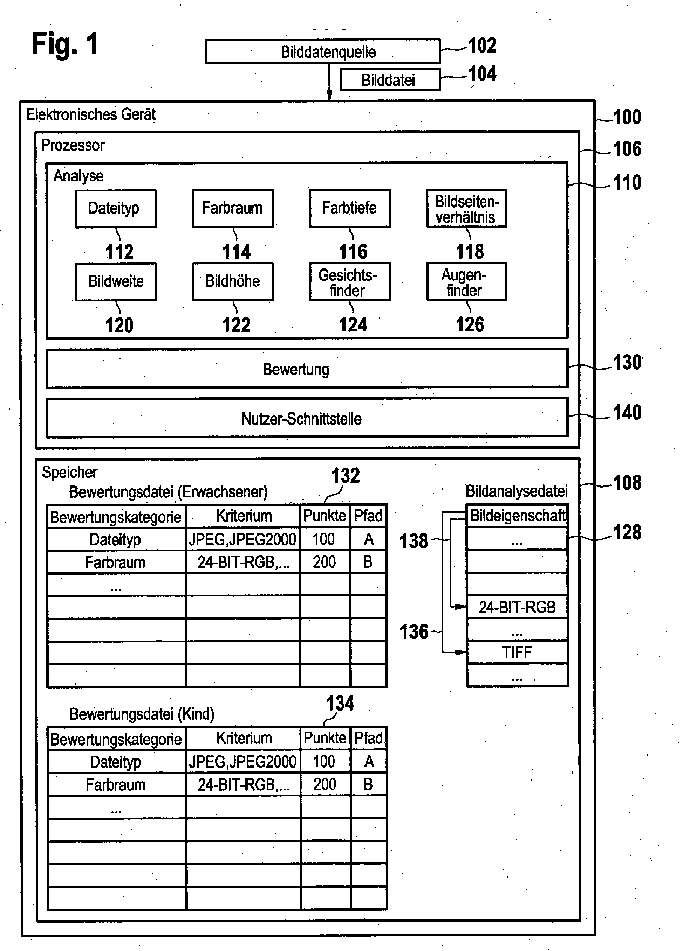

Die Figur 1 zeigt ein elektronisches Gerät 100. Bei dem elektronischen Gerät 100 kann es sich um einen Computer, insbesondere einen Personal Computer (PC), ein Datenbanksystem, insbesondere ein Gesichtsdatenbanksystem, ein Kamerasystem, einen Passbildautomaten oder dergleichen handeln.

Das elektronische Gerät 100 ist an eine Bilddatenquelle 102 anschließbar oder beinhaltet eine solche. Bei der Bilddatenquelle 102 kann es sich um einen Scanner, eine digitale Kamera oder ein Speichermedium handeln, auf dem eine Bilddatei 104 gespeichert ist.

Wenn es sich bei der Bilddatenquelle 102 beispielsweise um einen Scanner handelt, wird ein Passphoto eingescannt, um die Bilddatei 104 zu erzeugen und in das elektronische Gerät 100 einzugeben.

Das elektronische Gerät 100 hat zumindest einen Prozessor 106 und einen Datenspeicher 108.

Der Prozessor 106 dient zur Ausführung eines Analyseprogramms 110, welches zur Durchführung einer Bildanalyse eines Gesichtsbildes ausgebildet ist. Hierzu beinhaltet das Analyseprogramm 110 verschiedene Programmkomponenten, wie zum Beispiel eine Programmkomponente 112 zur Bestimmung des Dateityps der Bilddatei 104, eine Programmkomponente 114 zur Bestimmung des Farbraums, eine Programmkomponente 116 zur Bestimmung der Farbtiefe, eine Programmkomponente 118 zur Bestimmung des Bildseitenverhältnisses (sogenanntes Aspect Ratio), eine Programmkomponente 120 zur Bestimmung der Bildweite, eine Programmkomponente 122 zur Bestimmung der Bildhöhe, eine Programmkomponente 124, die als Gesichtsfinder ausgebildet ist, eine Programmkomponente 126, die als Augenfinder ausgebildet ist, und / oder weitere Programmkomponenten zur Analyse der Bilddatei 104 hinsichtlich anderer oder ergänzender Bildeigenschaften.

Das Analyseprogramm 110 ist so ausgebildet, dass die Analyseergebnisse, die mit Hilfe der Programmkomponenten 112 bis 126 erhalten werden, in strukturierter Form ausgegeben werden. Beispielsweise erfolgt die Ausgabe in Form einer Bildanalysedatei 128. Bei der Bildanalysedatei 128 handelt es sich vorzugsweise um eine Datei einer Auszeichnungssprache, wie zum Beispiel XML. Die Bildanalysedatei 128 beinhaltet zu jeder vorgegebenen Bewertungskategorie die entsprechende Bildeigenschaft, die mit Hilfe einer oder mehrerer der Programmkomponenten 112 bis 126 festgestellt worden ist.

Der Prozessor 106 dient ferner zur Ausführung eines Bewertungsprogramms 130. Das Bewertungsprogramm 130 dient zur Bewertung der Bildanalyseergebnisse, wie sie in der Bildanalysedatei 128 festgehalten sind, und zwar anhand eines Bewertungsschemas. Das Bewertungsschema selbst ist nicht Teil des Bewertungsprogramms 130, sondern es ist in einer separaten Bewertungsdatei festgelegt, auf welche das Bewertungsprogramm 130 zugreift.

In der hier betrachteten Ausführungsform sind in dem Datenspeicher 108 eine Bewertungsdatei 132 und eine alternative Bewertungsdatei 134 gespeichert. Die Bewertungsdateien 132 und 134 beinhalten jeweils ein strukturiertes Bewertungsschema. Vorzugsweise sind die Bewertungsdateien 132 und 134 ebenfalls als XML-Dateien ausgebildet. Die Bewertungsdateien beinhalten jeweils Bewertungsschemata, die vorgegebene Kriterienkataloge im wesentlichen 1:1 umsetzen.

Beispielsweise beinhaltet die Bewertungsdatei 132 für jede Bewertungskategorie ein vorgegebenes Kriterium, bei dessen Erfüllung ein vorgegebener Punktwert vergeben wird. Der Bewertungskategorie ist ferner eine Pfadangabe zugeordnet, die es erlaubt, auf die entsprechende Bildeigenschaft in der Bildanalysedatei 128 zuzugreifen, die zu der Bewertungskategorie gehört, und die hinsichtlich des vorgegebenen Kriteriums zu überprüfen ist.

Beispielsweise beinhaltet die Bewertungsdatei 132 die Bewertungskategorie "Dateityp" mit den zugeordneten Kriterien "JPEG" oder "JPEG2000" sowie dem Punktwert von 100 Punkten. Der Bewertungskategorie "Dateityp" ist der Pfad A in der Bildanalysedatei 128 zugeordnet. Dieser Pfad ist durch den Zeiger 136 in der Figur 1 dargestellt. Die Pfadangabe gibt also nicht die Speicheradresse der Bildanalysedatei 128 oder der hier interessierenden Bildeigenschaft an, sondern den logischen Pfad innerhalb der Bildanalysedatei 128 zu der interessierenden Bildeigenschaft, das heißt hier dem Dateityp.
Zur Bewertung des Bildanalyseergebnisses in der Bewertungskategorie "Dateityp" wird also unter Verwendung der Pfadangabe A auf das entsprechende Bildanalyseergebnis, das heißt hier "TIFF", in der Bildanalysedatei 128 zugegriffen und dieses mit dem Kriterium dieser Bewertungskategorie, das heißt "JPEG" oder JPEG2000" verglichen. Da der Dateityp "TIFF" keinem der beiden Dateitypen des Kriteriums entspricht, das heißt weder vom Typ "JPEG" noch vom Typ "JPEG2000" ist, ist dieses Kriterium nicht erfüllt und es werden daher keine Punkte vergeben.

Der Eintrag in der Bewertungsdatei 132 in der Bewertungskategorie "Farbraum" ist entsprechend aufgebaut. Als Kriterium für die Bewertung des Farbraums sind ein oder mehrere Farbräume angegeben, wie zum Beispiel 24-Bit-RGB. Der zugeordnete Punktwert beträgt hier 200. Ferner beinhaltet die Eintragung in der Bewertungskategorie "Farbraum" die Pfadangabe B. Durch den Pfad B wird der Eintrag in der Bildanalysedatei 128 betreffend das Bildanalyseergebnis in dieser Bewertungskategorie angegeben, wie durch den Zeiger 138 in der Figur 1 verdeutlicht.

Die Bewertungsdatei 132 kann weitere Bewertungskategorien beinhalten, wie zum Beispiel die Farbtiefe, das Bildseitenverhältnis, die Bildweite, Bildhöhe, den Augenabstand und / oder weitere Bewertungskategorien.

In der hier betrachteten Ausführungsform sind die den Bewertungskategorien in der Bewertungsdatei 132 zugeordneten Kriterien auf das frontale Gesichtsbild eines Erwachsenen abgestimmt.

In der alternativen Bewertungsdatei 134 sind diese Kriterien auf das frontale Gesichtsbild eines Kindes abgestimmt. Betrifft die Bilddatei 104 also das Gesichtsbild eines Erwachsenen, so wird für die Bewertung der Bilddatei 104 durch das Bewertungsprogramm 130 auf die Bewertungsdatei 132 zugegriffen; falls es sich dagegen bei der Bilddatei 104 um das Gesichtsbild eines Kindes handelt, wird anstelle dessen auf die Bewertungsdatei 134 zugegriffen.

In dem Speicher 108 können weitere Bewertungsdateien gespeichert sein, die zum Beispiel bestimmten Personentypen oder Bildaufnahmesituationen zugeordnet sind.

Beispielsweise kann eine weitere Bewertungsdatei vorhanden sein, die auf Personen mit Kopfbedeckung abgestimmt ist, etc.

Der Prozessor 106 dient ferner zur Ausführung der Programminstruktionen einer Nutzer-Schnittstelle 140, beispielsweise einer graphischen Nutzer-Schnittstelle. Über die Nutzer-Schnittstelle 140 erfolgt die Ausgabe des Bewertungsergebnisses.

Je nach Ausführungsform kann über die Nutzer-Schnittstelle 140 auch die Bewertungsdatei durch den Benutzer ausgewählt werden, die für die Bewertung durch das Bewertungsprogramm 130 verwendet werden soll. In einer anderen Ausführungsform kann diese Auswahl auch automatisch erfolgen, wenn nämlich das Analyseprogramm 110 dazu ausgebildet ist, den Personentyp der Bilddatei 104 automatisch zu erkennen.

In diesem Fall kann der Personentyp, also zum Beispiel "Erwachsener" oder "Kind" als Bildanalyseergebnis mit in die Bildanalysedatei 128 geschrieben werden. Das Bewertungsprogramm 130 greift dann über einen entsprechenden vorgegebenen Pfad auf diese Eintragung in der Bildanalysedatei 128 zu, um auszulesen, um welchen Personentyp es sich handelt, und um daraufhin die dementsprechende Bewertungsdatei auszuwählen, die für die anschließende Bewertung der Bildanalysedatei 128 verwendet werden soll.

Die Nutzer-Schnittstelle 140 ist zur Generierung von Ausgabesignalen ausgebildet, welche das Bewertungsergebnis anzeigen. Beispielsweise kann die Nutzer-Schnittstelle ampelförmig ausgebildet sein, das heißt eine rote und eine grüne Kontrollleuchte aufweisen. Wenn als Ergebnis der Bewertung die Bilddatei 104 eine hinreichende Qualität aufweist, also beispielsweise biometrietauglich ist, so wird die grüne Kontrollleuchte angesteuert; im gegenteiligen Fall wird die rote Kontrollleuchte angesteuert.
Die Nutzer-Schnittstelle 140 kann in einer anderen Ausführungsform Ausgabesignale generieren, die die Lage der ermittelten Qualität auf einem Bewertungskontinuum angeben. Beispielsweise kann die Ausgabe der Qualität als Punktwert, Prozentsatz oder als Zeigerausschlag ausgegeben werden.

Alternativ oder zusätzlich kann das Bewertungsergebnis auch durch ein akustisches oder anderes Signal ausgegeben werden.

In einer Ausführungsform ist das Bewertungsprogramm 130 so ausgebildet, dass der aufaddierte Punktwert, den die Bildanalysedatei 128 bei der Bewertung erzielt hat, mit einem vorgegebenen Schwellwert verglichen wird. Wenn dieser Schwellwert unterschritten wird, bedeutet dies, dass die Bilddatei 104 keine hinreichende Qualität aufweist, so dass das entsprechende Ausgabesignal von der Nutzer-Schnittstelle 140 generiert wird. Die Lage des Schwellwerts kann in das Bewertungsprogramm 130 einprogrammiert sein. Alternativ kann die Lage des Schwellwerts auch in den Bewertungsdateien 132 und 134 festgelegt sein.

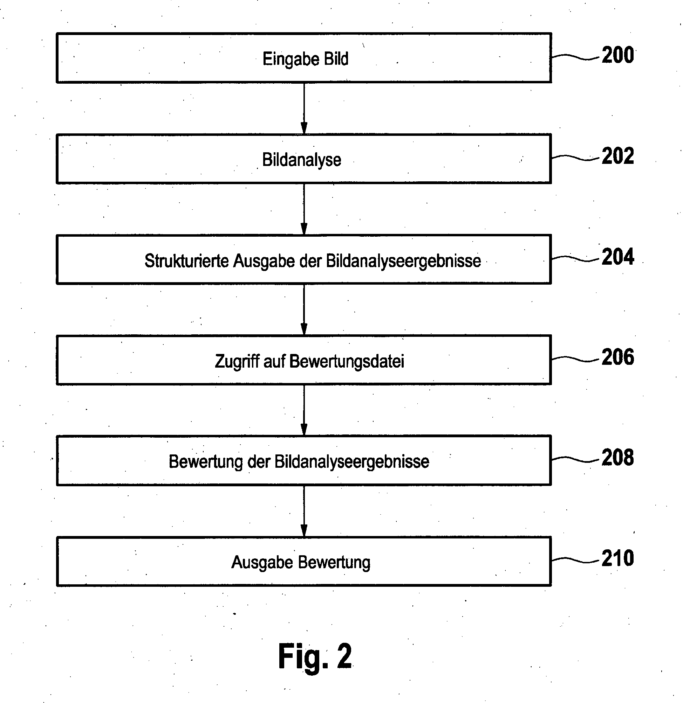

Die Figur 2 zeigt ein entsprechendes Flussdiagramm. In dem Schritt 200 wird ein Bild in das elektronische Gerät eingegeben. Dies kann durch photographische Aufnahme des Bildes mit einer Digitalkamera, durch Einscannen eines Papierabzugs oder durch Einlesen der Bilddatei von einem Speichermedium erfolgen. In dem Schritt 202 wird von dem elektronischen Gerät eine Analyse der Bilddatei durchgeführt. Hierdurch werden verschiedene Bildeigenschaften ermittelt, die in strukturierter Form als Bildanalysedatei in dem Schritt 204 ausgegeben werden. Die zu untersuchenden Bildeigenschaften können dabei fest vorgegeben sein, etwa durch entsprechende Programmierung des Analyseprogramms 110.

In dem Schritt 206 wird das Bewertungsprogramm 100 gestartet, nachdem das Analyseprogramm die Bildanalysedatei generiert und ausgegeben hat. Das Bewertungsprogramm greift dann auf die in dem Speicher des elektronischen Geräts gespeicherte Bewertungsdatei und auf die Bildanalysedatei zu, um die Bildanalyseergebnisse dementsprechend zu bewerten (Schritt 208).
In dem Schritt 210 wird das Ergebnis der Qualitätsbewertung über die Nutzer-Schnittstelle des elektronischen Geräts ausgegeben.

Wenn mehrere Bewertungsdateien in dem Speicher des elektronischen Geräts vorhanden sind, muss vor der Durchführung der Bewertung eine Auswahl einer der Bewertungsdateien erfolgen, die für die Durchführung der Bewertung verwendet werden soll. Dies kann manuell durch einen Benutzer über die Nutzer-Schnittstelle erfolgen oder programmgesteuert, beispielsweise indem in Abhängigkeit von dem durch das Analyseprogramm erkannten Personentyp oder in Abhängigkeit von dem Verwendungszweck des Bildes die Bewertungsdatei automatisch ausgewählt wird.

Die Bewertungskategorien der Bewertungsdateien können identisch sein, so dass die Bildanalysedatei unabhängig von der Bewertungsdatei immer dieselbe Struktur hat und dieselben Bildeigenschaften beinhaltet. In einer Ausführungsform können die Bewertungskategorien der Bewertungsdateien aber auch unterschiedlich sein. In diesem Fall kann das Analyseprogramm auf die ausgewählte Bewertungsdatei zugreifen, um die Bewertungskategorien, die in dieser ausgewählten Bewertungsdatei aufgelistet sind, zu lesen. Die Bildanalyse kann dann auf diese Bewertungskategorien beschränkt werden, da weitere Bildeigenschaften gemäß der ausgewählten Bewertungsdatei ohnehin nicht in die Bewertung eingehen.

Der Anhang 1 zeigt einen Ausschnitt aus einer Ausführungsform einer Bewertungsdatei, die als XML-Datei ausgebildet ist. Der Dateiname der Bewertungsdatei ist "XMLBewertungsschema-extern".

Die Bewertungsdatei dient zur qualitativen Bewertung von frontalen Gesichtsaufnahmen für die Erstellung von elektronischen Ausweisdokumenten, wie zum Beispiel Reisepässen, Personalausweisen, Führerscheinen, Visa und dergleichen.

Die Bewertungsdatei beinhaltet verschiedene Bewertungskategorien, die jeweils durch <measurement name="..." gekennzeichnet sind. Auf die Angabe der Bewertungskategorie folgt die Pfadangabe "path" zum Zugriff auf das entsprechende Bildanalyseergebnis in der Bildanalysedatei (vgl. Pfade A und B der Figur 1).

Danach folgt die Definition des Kriteriums in dieser Bewertungskategorie, das heißt eine Auflistung der verschiedenen in Betracht kommenden Bildeigenschaften.

Schließlich folgt die Angabe "Mandatory" oder "Optional", zur Spezifizierung, ob es sich um ein Muss- oder ein Kann-Kriterium handelt. Abschließend ist die konkrete Bedingung formuliert, die erfüllt sein muss, damit ein bestimmter Punktwert vergeben werden kann.

Der Ausschnitt der Bewertungsdatei des Anhangs 1 zeigt die Bewertungskategorien Dateityp ("Check File Type") mit den in Frage kommenden Dateitypen, denen Zahlen 1 bis 7 zugeordnet sind. Das Prüfkriterium lautet hier, dass es sich entweder um einen Dateityp des Formats JPEG (1) oder JPEG2000 (2) handeln muss, damit 100 Punkte vergeben werden können. Durch die Angabe "Mandatory" ist ferner klargestellt, dass es sich hierbei um ein Muss-Kriterium handelt. Durch die Angabe </measurement> wird der Eintrag in der Bewertungskategorie "Dateityp" abgeschlossen.

Danach folgt die Bewertungskategorie "Dateigröße" ("Check File Size"), Bildkompression ("Check Image Compression"), Farbraum ("Check Image Colour Space"), sowie weitere im Anhang 1 nicht gezeigte Eintragungen, beispielsweise für die Bewertungskategorien Farbtiefe, Bildweite, Bildhöhe, Bildseitenverhältnis, Anzahl der auf dem Bild gezeigten Gesichter, Anzahl der Augen, Augendistanz, relative horizontale Kopfposition, relative vertikale Kopfposition, Verhältnis von Kopfbreite zu Bildbreite, Verhältnis von Kopfhöhe zur Bildhöhe und / oder weitere Bewertungskategorien.

Der Anhang 2 zeigt einen Ausschnitt einer anderen Ausführungsform der Bewertungsdatei des Anhangs 1. Im Unterschied zu der Ausführungsform des Anhangs 1 beinhaltet die Bewertungskategorie "Dateityp" ein Muss- und ein Kann-Kriterium. Als Muss-Kriterium ist definiert, dass der Dateityp JPEG, JPEG2000, BMP, TIFF, GIF oder PNG sein muss. In diesem Fall wird der Punktwert von 100 Punkten vergeben. Als Kann-Kriterium ist definiert, dass der Dateityp vom Typ JPEG oder JPEG2000 sein muss. Wenn diese Bedingung erfüllt ist, werden weitere 50 Punkte vergeben, die zu den 100 Punkten des Muss-Kriteriums hinzu addiert werden.

Die weiteren Bewertungskategorien der Bewertungsdatei in der Ausführungsform des Anhangs 2 können weitere Muss- und Kann-Kriterien beinhalten.

Vorzugsweise werden nur dann Punkte für die Erfüllung von Kann-Kriterien vergeben, wenn sämtliche der Muss-Kriterien in allen Bewertungskategorien erfüllt sind. Dadurch wird vermieden, dass bei Nichterfüllung eines der Muss-Kriterien die entsprechende Punktezahl durch Erfüllung von Kann-Kriterien ausgeglichen wird.

Die vergebenen Punktwerte werden aufaddiert und mit einem definierten Schwellwert verglichen, um die Qualität des Bildes zu bewerten.

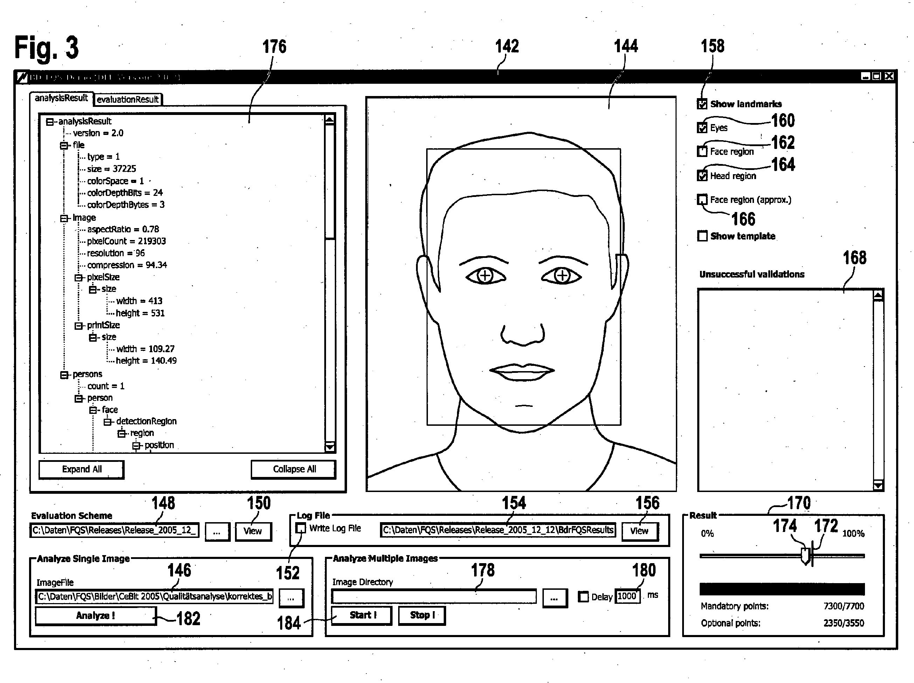

Die Figur 3 zeigt eine Ausführungsform einer graphischen Nutzer-Schnittstelle. Die Nutzer-Schnittstelle hat ein Anzeige-Fenster ("Window") 142 mit einem Anzeigebereich 144 für die Bilddatei 104 (vgl. Figur 1). In dem hier betrachteten Anwendungsfall handelt es sich bei der Bilddatei 104 um ein digitalisiertes Bild einer frontalen Gesichtsaufnahme eines männlichen Erwachsenen.

Die zu bewertende Bilddatei 104 kann durch Eingabe des entsprechenden Zugriffspfads in das Eingabefeld 146 ausgewählt werden. Die Bewertungsdatei (z.B. Bewertungsdatei 132 oder 134 - vgl. Fig. 1), die für die Bewertung der ausgewählten Bilddatei verwendet werden soll, kann durch Eingabe einer Pfadangabe in das Eingabefeld 148 ausgewählt werden. Durch Betätigung des virtuellen Bedienelements 150, beispielsweise durch Anklicken mit einer Computermaus, kann die ausgewählte Bewertungsdatei geöffnet und für Kontrollzwecke angezeigt werden.

Durch Anklicken des Eingabefeldes 152 ("Write Log File") kann der Benutzer spezifizieren, dass die durchgeführten Bewertungen in einer sogenannten "Log File" protokolliert werden. Die "Log File" wird durch Eingabe eines entsprechenden Pfades in das Eingabefeld 154 spezifiziert. Durch Betätigung des Bedienelements 156 kann die "Log File" geöffnet werden.

Durch Anklicken des Eingabefeldes 158 kann der Benutzer spezifizieren, dass Markierungen hinsichtlich automatisch erkannter Gesichtsmerkmale in dem Anzeigebereich 144 dargestellt werden ("Show Landmarks"). Durch Anklicken des Eingabefeldes 160 kann der Benutzer spezifizieren, dass ein Marker für die Augen ("Eyes"), durch Anklicken des Eingabefeldes 162 für die Gesichtsregion ("Face Region"), durch Anklicken des Eingabefelds 164 für die Kopfregion ("Head Region"), und durch Anklicken des Eingabefelds 166 für die näherungsweise Gesichtsregion ("Face Region (approx.)") angezeigt werden sollen.

Der Anzeigebereich 168 dient zur Anzeige von nicht erfüllten Muss-Kriterien.

Der Anzeigebereich 170 dient zur Ausgabe des Bewertungsergebnisses auf einem Bewertungskontinuum zwischen 0 % und 100 %. Auf diesem Bewertungskontinuum ist ein Schwellwert 172 definiert, wobei das Ergebnis der Qualitätsbewertung durch einen Zeiger 174 auf diesem Kontinuum zwischen 0 % und 100 % angegeben wird.

Ferner werden in dem Anzeigebereich 170 im Klartext die aufaddierten Punkte für die Erfüllung von Muss-Kriterien ("Mandatory Points") angezeigt sowie die aufaddierten Punktwerte für die Erfüllung von Kann-Kriterien ("Optional Points") der bewerteten Bilddatei 104. ,

Das Anzeigefenster 142 hat ferner einen Anzeigebereich 176 zur Anzeige der Bildanalyseergebnisse in strukturierter Form sowie der Bewertungsergebnisse im Einzelnen, wobei zwischen den beiden Darstellungen durch Anklicken des Tab-Reiters "Analysis Result" und "Evaluation Result" gewechselt werden kann.

Ferner hat das Anzeigefenster 142 ein Eingabefeld 178 für eine Pfadangabe auf ein Bildverzeichnis ("Image Directory"), in dem sich mehrere Bilder befinden. Diese können automatisch hintereinander bewertet werden, wobei zur Mitverfolgung der ablaufenden Bewertung durch den Benutzer optional eine Verzögerung ("Delay") durch Eingabe einer entsprechenden zeitlichen Verzögerung in das Eingabefeld 180 spezifiziert werden kann.

Wenn ein einzelnes Bild bewertet werden soll, so betätigt der Benutzer das Bedienelement 182, so dass die Bewertung für die durch die Pfadeingabe in dem Eingabefeld 146 spezifizierte Bilddatei 104 gestartet wird. Durch Betätigung des Bedienelements 184 wird dagegen die Bewertung der Bilder in dem Bildverzeichnis, welches in dem Eingabefeld 178 spezifiziert ist, gestartet.

In dem hier betrachteten Anwendungsfall hat der Benutzer in das Eingabefeld 146 eine Pfadangabe auf die Bilddatei 104 eingegeben und eine Bewertungsdatei durch Eingabe eines Pfads in das Eingabefeld 148 ausgewählt. Durch Anklicken des Bedienelements 182 hat der Benutzer die Analyse und anschließende Bewertung der ausgewählten Bilddatei 104 gestartet.

Das Ergebnis der Analyse und der Bewertung ist in der Figur 3 dargestellt. In dem Anzeigebereich 144 für die Bilddatei 104 sind die spezifizierten Marker für die Augen und die Kopfregion ergänzt. Die Anzeige dieser Marker ermöglicht dem Benutzer eine Plausibilitätskontrolle, dahingehend, ob die automatische Erkennung von Gesichtsbereichen und Merkmalen korrekt gearbeitet hat oder nicht. Falls zum Beispiel die Marker für die Augen nicht an der richtigen Stelle angezeigt werden, kann der Benutzer die Marker mit der Computermaus manuell verschieben, um die unzutreffende automatische Erkennung der Lage der Augen zu korrigieren. Nach der Eingabe einer solchen manuellen Korrektur wird die Bewertung automatisch erneut vorgenommen.

In dem hier betrachteten Beispielsfall erreicht die Qualität der Bilddatei 104 nicht ganz den Schwellwert 172, wie durch Lage des Zeigers 174 angezeigt wird. Es wurden 7300 von 7700 Punkten für die Erfüllung der Muss-Kriterien vergeben, das heißt das ein oder mehrere Muss-Kriterien nicht erfüllt worden sind. Daher können die fehlenden Punkte auch nicht durch für die Erfüllung von Kann-Kriterien erreichte Punkte, in diesem Fall 2350 Punkte, ausgeglichen werden.

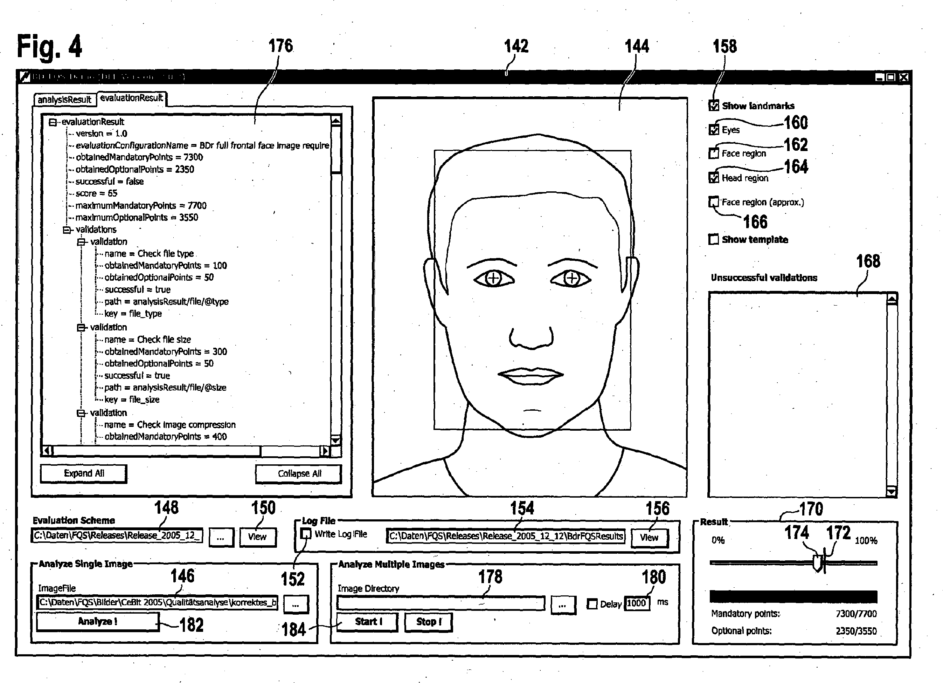

Die Bildanalyseergebnisse im Einzelnen werden in Form einer Baumstruktur in dem Anzeigebereich 176 ausgegeben, wie in der Figur 3 dargestellt. Durch Anklicken des Tab-Reiters "Evaluation Result" werden die Bewertungsergebnisse in den einzelnen Bewertungskategorien ebenfalls in Form einer Baumstruktur in dem Anzeigebereich 176 ausgegeben, wie in der Figur 4 dargestellt.

Falls die Qualität der Bilddatei 104 oberhalb des Schwellwerts 172 ist, wird diese als für die Herstellung eines Ausweisdokuments geeignet betrachtet.

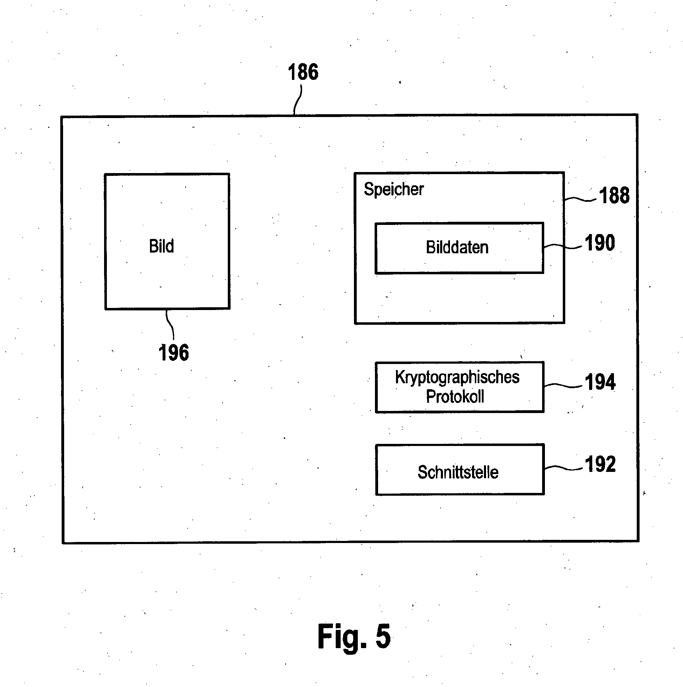

Die Figur 5 zeigt schematisch ein entsprechendes Ausweisdokument 186. Hierbei kann es sich beispielsweise um ein Papier basiertes Dokument oder um eine Chipkarte handeln. Das Ausweisdokument 186 hat einen nicht-flüchtigen Speicher 188, in dem Bilddaten 190 des Trägers des Ausweisdokuments 186 gespeichert sind. Auf den Speicher 188 kann über eine Schnittstelle 192 erforderlichenfalls mittels eines kryptographischen Protokolls 194 zugegriffen werden. Die Schnittstelle kann kontaktbehaftet oder drahtlos, beispielsweise als RFID, ausgebildet sein.

Zusätzlich kann das Bild des Trägers des Ausweisdokuments 186, welches für die Erzeugung der Bilddaten 190 gedient hat, auf dem Ausweisdokument 186 aufgedruckt sein (Bild 196).

Für eine verbesserte Ausweiskontrolle werden die Bilddaten 190 aus dem Speicher 188 ausgelesen, angezeigt und mit dem aufgedruckten Bild 196 verglichen. Hierdurch ist ein zusätzlicher Fälschungsschutz gegeben.

Ferner können die Bilddaten 190 auch für die Zwecke einer Gesichtsbiometrie verwendet werden.

### Bezugszeichenliste

- 100: elektronisches Gerät
- 102: Bilddatenquelle
- 104: Bilddatei
- 106: Prozessor
- 108: Datenspeicher
- 110: Analyseprogramm
- 112: Programmkomponente
- 114: Programmkomponente
- 116: Programmkomponente
- 118: Programmkomponente
- 120: Programmkomponente
- 122: Programmkomponente
- 124: Programmkomponente
- 126: Programmkomponente
- 128: Bildanalysedatei
- 130: Bewertungsprogramm
- 132: Bewertungsdatei
- 134: Bewertungsdatei
- 136: Zeiger
- 138: Zeiger
- 140: Nutzer-Schnittstelle
- 142: Anzeigefenster
- 144: Anzeigebereich
- 146: Eingabefeld
- 148: Eingabefeld
- 150: Bedienelement
- 152: Eingabefeld
- 154: Eingabefeld
- 156: Bedienelement
- 158: Eingabefeld
- 160: Eingabefeld
- 162: Eingabefeld
- 164: Eingabefeld
- 166: Eingabefeld
- 168: Anzeigebereich
- 170: Anzeigebereich
- 172: Schwellwert
- 174: Zeiger
- 176: Anzeigebereich
- 178: Eingabefeld
- 180: Eingabefeld
- 182: Bedienelement
- 184: Bedienelement
- 186: Ausweisdokument
- 188: Speicher
- 190: Bilddaten
- 192: Schnittstelle
- 194: kryptographisches Protokoll
- 196: Bild

### Anhang 1

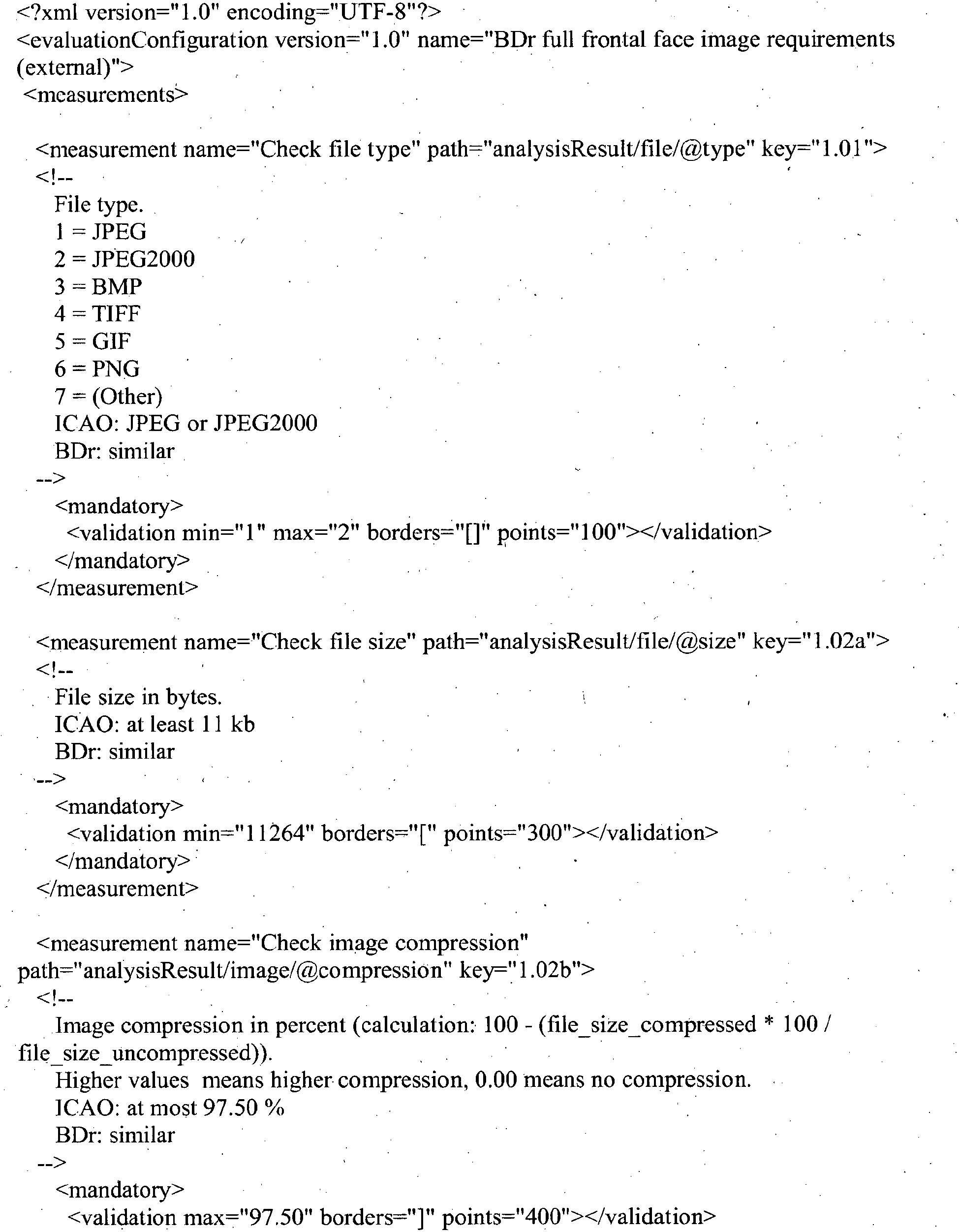

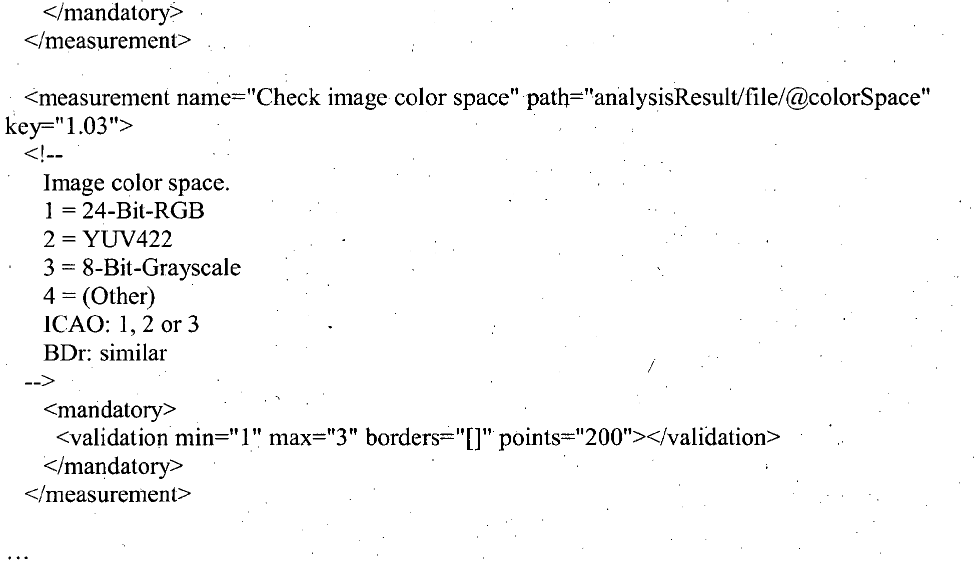

### Anhang 2

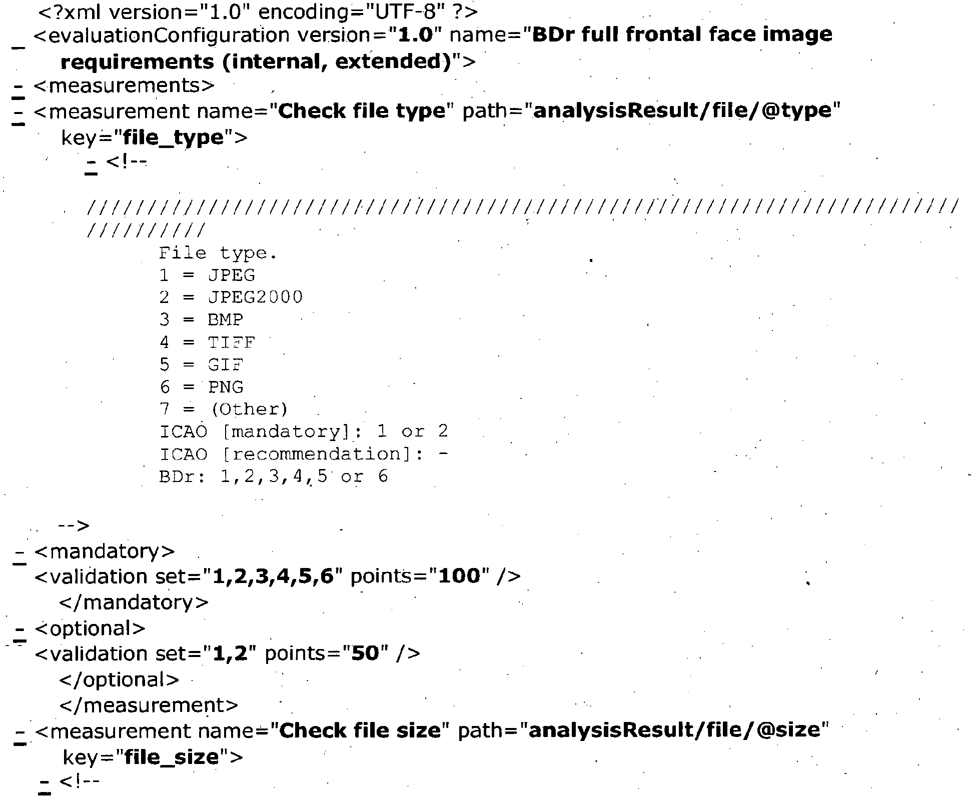

## Patentansprüche

1. Verfahren zur Bewertung der Qualität eines Bildes mit folgenden Schritten:
- Zugriff auf eine Bewertungsdatei (132, 134), die ein Bewertungsschema beinhaltet durch ein Bewertungsprogramm (130),
- Bewertung von Bildanalyseergebnissen anhand des Bewertungsschemas durch das Bewertungsprogramm,
- Ausgabe der Bewertung,
wobei das Bewertungsschema ein oder mehrere Muss-Kriterien und ein oder mehrere Kann-Kriterien beinhaltet, wobei bei Nichterfüllung eines der Muss-Kriterien unabhängig von den Kann-Kriterien die Qualität des Bildes als nicht ausreichend bewertet wird,
wobei das Bewertungsschema den einzelnen Muss- und Kann-Kriterien weiterhin Bewertungspunkte zuordnet, die Bewertungspunkte aufaddiert werden, soweit die Muss- und Kann-Kriterien erfüllt sind, die Summe der aufaddierten Bewertungspunkte mit einem Schwellwert verglichen wird und die Qualität des Bildes als nicht ausreichend bewertet wird, wenn die Summe kleiner als der Schwellwert ist.

2. Verfahren nach Anspruch 1, wobei die Bewertungsdatei aus zumindest ersten und zweiten Bewertungsdateien (132, 134) ausgewählt wird, wobei jede der ersten und zweiten Bewertungsdateien jeweils ein unterschiedliches Bewertungsschema beinhaltet.

3. Verfahren nach Anspruch 2, wobei die erste Bewertungsdatei zur Bewertung des Bildes eines ersten Personentyps und die zweite Bewertungsdatei zur Bewertung des Bildes eines zweiten Personentyps vorgesehen ist.

4. Verfahren nach einem der vorhergehenden Ansprüche, wobei das Bewertungsschema Eigenschaften und den Eigenschaften jeweils zugeordnete Schwellwerte definiert, und wobei die Bildanalyseergebnisse Messwerte der Eigenschaften beinhalten, die mit den jeweiligen Schwellwerten verglichen werden.

5. Verfahren nach einem der vorhergehenden Ansprüche, wobei eine Bildanalysedatei (128) generiert wird, die die Bildanalyseergebnisse beinhaltet, und wobei die Bewertung der Bildanalyseergebnisse anhand der Bildanalysedatei erfolgt.

6. Verfahren nach Anspruch 5, wobei die Bewertungsdatei Pfadangaben (A, B) zu einzelnen Bildanalyseergebnissen der Bildanalysedatei und den Pfadangaben jeweils zugeordnete Kriterien aufweist, wobei es sich bei den Pfadangaben jeweils um einen logischen Pfad innerhalb der Bildanalysedatei handelt.

7. Verfahren nach einem der vorhergehenden Ansprüche, wobei die Bewertung so durchgeführt wird, dass für die Erfüllung von Kann-Kriterien nicht die entsprechenden Bewertungspunkte vergeben werden, wenn zumindest eines der Muss-Kriterien nicht erfüllt ist.

8. Verfahren nach einem der vorhergehenden Ansprüche, wobei zur Ausgabe der Bewertung ein erstes oder zweites Signal erzeugt wird, wobei das erste Signal anzeigt, dass das Bild eine ausreichende Qualität aufweist und das zweite Signal anzeigt, dass das Bild eine nicht ausreichende Qualität aufweist.

9. Verfahren nach einem der vorhergehenden Ansprüche, wobei die Ausgabe der Bewertung als Angabe der Qualität auf einem Bewertungskontinuum erfolgt.

10. Verfahren nach einem der vorhergehenden Ansprüche, wobei nicht erfüllte Muss-Kriterien ausgegeben werden.

11. Computerprogrammprodukt mit ausführbaren Programminstruktionen zur Durchführung eines Verfahrens nach einem der vorhergehenden Ansprüche.

12. Verfahren zur Herstellung eines Dokuments (186) mit folgenden Schritten:
- Bewertung der Qualität eines Bildes mit einem Verfahren nach einem der Ansprüch 1-10,
- Speicherung des Bildes in einen elektronischen Speicher (188) des Dokuments, wenn das Bild eine ausreichende Qualität aufweist.

13. Elektronisches Gerät mit:
- Mitteln (102) zur Eingabe von Bilddaten (104),
- Mitteln (106; 130) zum Zugriff auf eine Bewertungsdatei (132, 134), die ein Bewertungsschema beinhaltet durch ein Bewertungsprogramm (130),
- Mitteln (106, 110) zur Durchführung einer Bildanalyse,
- Mitteln (106, 130) zur Bewertung der Bildanalyse-Ergebnisse anhand des Bewertungsschemas durch das Bewertungsprogramm (130),
- Mitteln (170, 172, 174) zur Ausgabe der Bewertung
wobei das Bewertungsschema ein oder mehrere Muss-Kriterien und ein oder mehrere Kann-Kriterien beinhaltet, wobei die Mittel (106, 130) zur Bewertung der Bildanalyse-Ergebnisse dazu eingerichtet sind bei Nichterfüllung eines der Muss-Kriterien unabhängig von den Kann-Kriterien die Qualität des Bildes als nicht ausreichend zu bewerten,
wobei das Bewertungsschema den einzelnen Muss- und Kann-Kriterien weiterhin Bewertungspunkte zuordnet und die Mittel (106, 130) zur Bewertung der Bildanalyse-Ergebnisse dazu eingerichtet sind, die Bewertungspunkte aufzuaddieren, soweit die Muss- und Kann-Kriterien erfüllt sind, die Summe der aufaddierten Bewertungspunkte mit einem Schwellwert zu vergleichen und die Qualität des Bildes als nicht ausreichend zu bewerten, wenn die Summe der aufaddierten Bewertungspunkte kleiner als der Schwellwert ist.

14. Elektronisches Gerät nach Anspruch 13, wobei das Bewertungsschema Bildeigenschaften und den Bildeigenschaften jeweils zugeordnete Kriterien, wie z. B. Schwellwerte, definiert, und wobei die Bewertungsdatei zum Zugriff durch ein Bewertungsprogramm (130) ausgebildet ist.

## Claims

1. A method for evaluating the quality of an image, comprising the following steps:
- accessing an evaluation file (132, 134) containing an evaluation schema by means of an evaluation program (130),
- evaluating image analysis results on the basis of the evaluation schema by means of the evaluation program,
- outputting the evaluation,
wherein the evaluation schema contains one or more must criteria and one or more can criteria, wherein the quality of the image is evaluated as being insufficient if one of the must criteria is not met, independently of the can criteria,
wherein the evaluation schema furthermore assigns evaluation points to the individual must and can criteria, the evaluation points are added if the must and can criteria are met, the sum of the added evaluation points is compared with a threshold value, and the quality of the image is evaluated as being insufficient if the sum is smaller than the threshold value.

2. The method according to Claim 1, wherein the evaluation file is selected from at least first and second evaluation files (132, 134), wherein each of the first and second evaluation files contains a different evaluation schema.

3. The method according to Claim 2, wherein the first evaluation file is provided for evaluation of the image of a first person type and the second evaluation file is provided for evaluation of the image of a second person type.

4. The method according to one of the preceding claims, wherein the evaluation schema defines properties and the properties are each assigned threshold values, and wherein the image analysis results contain measured values of the properties, which are compared with the respective threshold values.

5. The method according to one of the preceding claims, wherein an image analysis file (128) is generated and contains the image analysis results, and wherein the image analysis results are assessed on the basis of the image analysis file.

6. The method according to Claim 5, wherein the evaluation file has pathnames (A, B) for individual image analysis results of the image analysis file and also path criteria assigned to each of the pathnames, wherein the pathnames are each a logical path within the image analysis file.

7. The method according to one of the preceding claims, wherein the evaluation is carried out such that, for the fulfilment of can criteria, the corresponding evaluation points are not awarded if at least one of the must criteria is not met.

8. The method according to one of the preceding claims, wherein a first or second signal is produced for the output of the evaluation, wherein the first signal indicates that the image has sufficient quality and the second signal indicates that the image has insufficient quality.

9. The method according to one of the preceding claims, wherein the evaluation is output as a specification of the quality on an evaluation continuum.

10. The method according to one of the preceding claims, wherein must criteria that are not met are output.

11. A computer program product with executable program instructions for carrying out a method according to one of the preceding claims.

12. A method for producing a document (186) comprising the following steps:
- evaluating the quality of an image using a method according to one of Claims 1 to 10,
- storing the image in an electronic memory (188) of the document if the image has sufficient quality.

13. An electronic device, comprising:
- means 9102) for inputting image data (104),
- means (106; 130) for accessing an evaluation file (132, 134) containing an evaluation schema by means of an evaluation program (130),
- means (106, 110) for carrying out an image analysis,
- means (106, 130) for evaluating the image analysis results on the basis of the evaluation schema by means of the evaluation program (130),
- means (170, 172, 174) for outputting the evaluation,
wherein the evaluation schema contains one or more must criteria and one or more can criteria, wherein the means (106, 130) for evaluating the image analysis results are designed to evaluate the quality of the image as being insufficient if one of the must criteria is not met, independently of the can criteria,
wherein the evaluation schema furthermore assigns evaluation points to the individual must and can criteria, and the means (106, 130) for evaluating the image analysis results are designed to add the evaluation points if the must and can criteria are met, to compare the sum of the added evaluation points with a threshold value, and to evaluate the quality of the image as being insufficient if the sum of the added evaluation points is smaller than the threshold value.

14. The electronic device according to Claim 13, wherein the evaluation schema defines image properties and criteria assigned to each of the image properties, such as threshold values, and wherein the evaluation file is designed for access by means of an evaluation program (130).

## Revendications

1. Procédé pour l'évaluation de la qualité d'une image, avec les étapes suivantes :
- accès à une donnée d'évaluation (132, 134) contenant un schéma d'évaluation, par un programme d'évaluation (130),
- évaluation de résultats d'analyse d'image à l'aide du schéma d'évaluation, par le programme d'évaluation,
- restitution de l'évaluation,
dans lequel le schéma d'évaluation contient un ou plusieurs critères obligatoires et un ou plusieurs critères facultatifs, dans lequel, en cas de non-respect de l'un des critères obligatoires indépendamment des critères facultatifs, la qualité de l'image est évaluée comme insuffisante,
dans lequel le schéma d'évaluation attribue en outre des points d'évaluation aux différents critères obligatoires et facultatifs, les points d'évaluation sont additionnés dans la mesure où les critères obligatoires et facultatifs sont remplis, la somme des points d'évaluation additionnés est comparée avec une valeur seuil et la qualité de l'image est évaluée comme insuffisante si la somme est inférieure à la valeur seuil.

2. Procédé selon la revendication 1, dans lequel la donnée d'évaluation est sélectionnée parmi au moins des premières et des deuxièmes données d'évaluation (132, 134), dans lequel chacune des premières et deuxièmes données d'évaluation (132, 134) contient respectivement un schéma d'évaluation différent.

3. Procédé selon la revendication 2, dans lequel la première donnée d'évaluation est prévue pour l'évaluation de l'image d'un premier type de personne, et la deuxième donnée d'évaluation est prévue pour l'évaluation de l'image d'un deuxième type de personne.

4. Procédé selon l'une des revendications précédentes, dans lequel le schéma d'évaluation définit des propriétés et des valeurs seuil respectivement attribuées aux propriétés, et dans lequel les résultats d'analyse d'image contiennent des valeurs de mesure des propriétés, qui sont comparées avec les valeurs seuils correspondantes.

5. Procédé selon l'une des revendications précédentes, dans lequel une donnée d'analyse d'image (128) est générée, laquelle contient les résultats d'analyse d'image, et dans lequel l'évaluation des résultats d'analyse d'image est effectuée à l'aide de la donnée d'analyse d'image.

6. Procédé selon la revendication 5, dans lequel la donnée d'analyse d'image comporte des indications de chemin (A, B) pour différents résultats d'analyse d'image de la donnée d'analyse d'image ainsi que des critères respectivement attribués aux indications de chemin, les indications de chemin consistant respectivement en un chemin logique dans la donnée d'analyse d'image.

7. Procédé selon l'une des revendications précédentes, dans lequel l'évaluation est effectuée de manière à ce que pour la réalisation de critères facultatifs, les points d'évaluation correspondants ne seront pas attribués si au moins l'un des critères obligatoires n'est pas rempli.

8. Procédé selon l'une des revendications précédentes, dans lequel un premier ou un deuxième signal est produit pour la restitution de l'évaluation, le premier signal indiquant que l'image présente une qualité suffisante et le deuxième signal indiquant que l'image ne présente pas une qualité suffisante.

9. Procédé selon l'une des revendications précédentes, dans lequel la restitution de l'évaluation est effectuée en tant qu'indication de la qualité sur une évaluation continue.

10. Procédé selon l'une des revendications précédentes, dans lequel les critères obligatoires non respectés sont livrés.

11. Produit de programme informatique avec des instructions de programme exécutables, pour l'exécution d'un procédé selon l'une des revendications précédentes.

12. Procédé pour la création d'un document (186), avec les étapes suivantes :
- évaluation de la qualité d'une image à l'aide d'un procédé selon l'une des revendications 1 à 10,
- enregistrement de l'image dans une mémoire électronique (188) du document lorsque l'image présente une qualité suffisante.

13. Dispositif électronique avec :
- des moyens (102) pour l'entrée de données d'image (104),
- des moyens (106 ; 130) pour l'accès à une donnée d'évaluation (132, 134) contenant un schéma d'évaluation, par un programme d'évaluation (130),
- des moyens (106, 110) pour l'exécution d'une analyse d'image,
- des moyens (106, 130) pour l'évaluation des résultats d'analyse d'image à l'aide du schéma d'évaluation, par le programme d'évaluation (130),
- des moyens (170, 172, 174) pour la restitution de l'évaluation,
dans lequel le schéma d'évaluation contient un ou plusieurs critères obligatoires et un ou plusieurs critères facultatifs, dans lequel les moyens (106, 130) pour l'évaluation des résultats d'analyse d'image sont conçus pour évaluer la qualité de l'image comme insuffisante en cas de non-respect de l'un des critères obligatoires indépendamment des critères facultatifs,
dans lequel le schéma d'évaluation attribue en outre des points d'évaluation aux différents critères obligatoires et facultatifs, et les moyens (106, 130) pour l'évaluation des résultats d'analyse d'image sont conçus pour additionner les points d'évaluation sont additionnés, dans la mesure où les critères obligatoires et facultatifs sont remplis, pour comparer la somme des points d'évaluation additionnés avec une valeur seuil, et pour évaluer la qualité de l'image comme insuffisante si la somme est inférieure à la valeur seuil.

14. Dispositif électronique selon la revendication 13, dans lequel le schéma d'évaluation définit des propriétés d'image et des critères respectivement attribuées aux propriétés d'image, et dans lequel la donnée d'évaluation est conçue pour l'accès par un programme d'évaluation (130).
